# EUROPÄISCHE PATENTSCHRIFT

(11) **EP 1 593 918 B1**
(45) Veröffentlichungstag und Bekanntmachung des Hinweises auf die Patenterteilung: **13.03.2013**
(21) Anmeldenummer: 05103711.7
(22) Anmeldetag: 03.05.2005
(51) Int. Cl.: F25D 3/10, F25D 11/00, F25D 17/06

(54) **Indirekte Kühlung bei Kühlfahrzeugen**
Indirect cooling of refrigerated vehicles
Refroidissement indirect pour des véhicules frigorifiques

(30) Priorität: 06.05.2004 DE 102004022867
(43) Veröffentlichungstag der Anmeldung: 09.11.2005
(73) Patentinhaber: Air Liquide Deutschland GmbH, 40235 Düsseldorf (DE); L'AIR LIQUIDE, Société Anonyme pour l'Etude et l'Exploitation des Procédés Georges Claude, 75007 Paris (FR)
(72) Erfinder: Lürken, Franz, 47906, Kempen (DE)
(74) Vertreter: Kahlhöfer, Hermann

(56) Entgegenhaltungen:
- EP-A- 0 599 610
- EP-A- 0 624 763
- WO-A-01/53764
- GB-A- 2 275 098
- US-A- 3 685 310
- US-A- 5 267 443
- US-A- 5 582 015

## Beschreibung

Die vorliegende Erfindung betrifft ein Kühlsystem für Kühlfahrzeuge mit mindestens einer Kühlkammer, wobei das Kühlsystem mit einem kälteverflüssigten Gas betrieben wird, ein Verfahren zur Kühlung einer oder mehrerer Kühlkammern mit einem kälteverflüssigten Gas und eine Verwendung einer dem Kühlsystem entsprechenden Vorrichtung.

Seit ca. 30 Jahren wird Stickstoff zur Fahrzeugkühlung eingesetzt. Bei diesem Verfahren wird Stickstoff in flüsser, tiefkalter Form in einem vakuumisolierten Behälter am oder im Fahrzeug mitgeführt. Dieser wird bei Kältebedarf über eine Rohrleitung entnommen und durch den Eigendruck des Mediums direkt in den zu kühlenden Raum eingesprüht. Das Verfahren ist besonders einfach und störungsunempfindlich. Ferner ist die Kälteleistung, unabhängig von der Umgebungstemperatur, immer gleich hoch. Sie ist prinzipiell nur durch den Durchlass der Einsprühdüsen begrenzt. Daher zeigen auf diese Weise gekühlte LKW, die im Verteilerverkehr von Lebensmitteln eingesetzt werden und naturgemäß zahlreiche Türöffnungen während des Kühlbetriebs haben, erhebliche Vorteile bei der Qualität der Kühlung. Insbesondere im Hochsommer, wenn mechanische Kälteanlagen mit Leistungsabfällen an den Kondensatoren und mit Vereisungen an den Verdampfern zu kämpfen haben, ist dieses Verfahren sehr vorteilhaft. Nach einer Türöffnung ist in Sekundenschnelle die Solltemperatur wieder erreicht.

Das Verfahren hat aber auch Nachteile. Der Stickstoffverbrauch ist relativ hoch, weil das in eine Kammer eingesprühte Gas zumindest teilweise auch als Abgas wieder entweicht. Wird beispielsweise eine Tiefkühlkammer (TK-Kammer, Kühlkammer mit Tiefkühltemperatur, z.B. minus 18°C) gekühlt, so liegt die Abgastemperatur bei ca. -30 bis -40 °C. Diesen Verlust gilt es zu senken. Ein anderer Punkt ist die notwendige Belüftung bevor der Laderaum betreten werden kann. Hier fällt unnötig viel Warmluft in den Laderaum. Das erneute Herunterkühlen geschieht zwar sehr schnell, kostet aber mehr Energie, und damit Geld, als notwendig. Der sonst übliche Einbau von Kälterückhaltesystemen scheidet bei cryogen gekühlten Fahrzeugen aus, da sie die Belüftung in gefährlicher Weise behindern würden.

Ferner ist das cryogene Verfahren in sicherheitstechnischer Hinsicht nachteilig.

Eine Kühleinheit für einen zu kühlenden Raum und ein entsprechendes Verfahren werden beispielsweise in der EP-B1-0826937 beschrieben.

Aus der US 5 582 015 sind mehrere in Reihe geschaltete Wärmetauscher zum Verdampfen von flüssigem Stickstoff bekannt, in denen auch ein Phasenübergang stattfindet. Der Einsatz in Kühlfahrzeugen und die Verwendung eines Phasentrenners sind nicht beschrieben.

In der US 5 267 443 und der EP 0 599 610 A2 sind komplexe stationäre Kühlsysteme unter Verwendung von cryogen verflüssigtem Gas beschrieben, bei denen das Prinzip der indirekten Kühlung Anwendung findet und mehrere Wärmetauscher zum Einsatz kommen.

Die US 3 685 310 beschäftigt sich mit einem Kühlfahrzeug, welches mittels eines offenen Ammoniakkreislaufes gekühlt wird, wobei gasförmiges Ammoniak am Ende verbrannt und das entstehende Gas in die Atmosphäre entlassen wird. Bei dieser Anwendung von Ammoniak handelt es sich nicht um eine cryogene Verflüssigung von Gas zur späteren Kühlung eines Kühlraumes.

Es ist Aufgabe der Erfindung, eine alternative Kühlvorrichtung für Kühlfahrzeuge und ein alternatives Verfahren für die Kühlung bei Kühlfahrzeugen zu schaffen.

Gelöst wird die Aufgabe durch eine Vorrichtung mit den in Anspruch 1 beschriebenen Merkmalen und ein Verfahren mit den in Anspruch 6 beschriebenen Merkmalen.

Gegenstand der Erfindung sind ein indirektes cryogenes Transportkühlsystem (Kühlvorrichtung oder Kühlsystem für Kühlfahrzeuge), genannt CTI-System, und ein indirektes cryogenes Verfahren zur Transportkühlung (Kühlverfahren für Kühlfahrzeuge), genannt CTI-Verfahren. Das Kühlsystem umfasst zwei oder mehrere Wärmetauscher, die in einer oder mehreren Kühlkammern eines Kühlfahrzeuges angeordnet sind. Das Kühlsystem umfaßt in der Regel mindestens einen Wärmetauscher-Verdampfer (WTV), mindestens einen Phasentrenner (PhT), mindestens einen Wärmetauscher-Gasanwärmer (WTA) und vorzugsweise einen oder mehrere Ventilatoren (V). Das bevorzugte Transportkühlsystem umfaßt in der Regel fünf Arten von Hauptkomponenten: Wärmetauscher-Verdampfer (WTV), Wärmetauscher-Gasanwärmer (WTA), Phasentrenner (PhT), Ventilator (V), Steuerung mit verschiedenen Meß- und Regelkreisen (MSR). Wärmetauscher-Verdampfer (WTV), Wärmetauscher-Gasanwärmer (WTA), Phasentrenner (PhT) und ein oder mehrere Ventilatoren (V) sind in der Regel in einem oder mehreren Kühlräumen oder einer oder mehreren Kühlkammern des Transportkühlsystems angeordnet. Wärmetauscher-Verdampfer (WTV) und Wärmetauscher-Gasanwärmer (WTA) sind Wärmetauscher. Sie können in verschiedenen Kühlkammern angeordnet sein.

Das Transportkühlsystem ist in der Regel eine Vorrichtung für Ein- und Mehrkammer-Kühlfahrzeuge (Kraftfahrzeug mit einer oder mehreren Kühlkammern oder Kühlräumen zur Aufnahme oder Aufbewahrung von Kühlgut wie Lebensmitteln), bei dem ein Gas (z.B. kälteverflüssigtes Gas wie kälteverflüssigter Stickstoff) zur Kühlung eingesetzt wird,
welches durch einen oder mehrere Wärmetauscher (WT) seine Kälte an einen oder mehrere Kühlräume abgibt. Bei der Durchleitung durch den Wärmetauscher-Verdampfer wird das kälteverflüssigte Gas teilweise oder vollständig verdampft, wobei der Wärmetauscher-Verdampfer abgekühlt wird und die Kälte durch Wärmetausch in einem Kühlraum oder einer Kühlkammer genutzt wird. In dem in der Regel nachfolgend angeordneten Phasentrenner (PhT) wird nicht verdampftes kälteverflüssigtes Gas und durch Verdampfung gebildetes Gas getrennt. Das gebildete kalte Gas wird durch einen oder mehrere Wärmetauscher-Gasanwärmer (WTA) geleitet, wobei die Kälte des kalten Gases zur Kühlung eines Kühlraumes oder einer Kühlkammer genutzt wird. Danach wird das Gas vorzugsweise ins Freie abgeführt oder einer Nutzung zugeführt. Das kälteverflüssigte Gas, z.B. kälteverflüssigter Stickstoff, und daraus gebildetes Gas (Stickstoffgas) sind bei dem Kühlsystem von dem Innenraum der Kühlkammer oder Kühlkammern räumlich getrennt. Kälteverflüssigtes Gas und daraus gebildetes Gas werden als Kühlmittel bezeichnet.

Vorteilhaft durchströmt das Kühlmittel (kälteverflüssigtes Gas bzw. daraus gebildetes Gas) mehrere Wärmetauscher, wobei die Kühlmitteleigenschaften, insbesondere die Gaseigenschaften, am jeweiligen Ein- und Austritt geregelt werden und die Leistung der Wärmetauscher selbst geregelt wird.

Bei dem erfindungsgemäßen Verfahren wird der kälteverflüssigte Stickstoff über Wärmetauscher (WT) geführt, welche die Kälte im Laderaum halten und das Abgas ins Freie führen. Diese Technik ist insbesondere bei Mehrkammerfahrzeugen (z.B. Laderaum in zwei oder mehrere Kammern unterteilt) vorteilhaft. Hierbei ist eine dreifache Optimierungsaufgabe zu erfüllen:
A: Der Stickstoffverbrauch muss minimiert werden.
B: Die Abkühlzeit des Aufbaus muss minimiert werden.
C: Die Kälteverteilung innerhalb der und unter den Kühlkammern muss stimmen.

Das bevorzugte Verfahren bzw. das bevorzugte Kühlsystem werden im folgenden beschrieben. Kälteverflüssigter Stickstoff (LIN) wird aus dem Stickstofftank entnommen und im Wärmetauscher-Verdampfer verdampft. Die anfallende Kälte wird durch die Ventilatoren, welche Kammerluft über den Wärmetauscher-Verdampfer blasen in der Kammer verteilt. Der Gasstrom geht über einen Phasentrenner in die weiteren Wärmetauscher, die vorzugsweise in anderen Kühlkammern mit höheren Temperaturen montiert sind. Im Phasentrenner wird sichergestellt, dass keine Flüssigkeit in die nachfolgenden Wärmetauscher-Gasanwärmer läuft. In einzelnen Fällen kann es vorteilhaft sein, den Phasentrenner erst hinter den zweiten Wärmetauscher zu schalten, um ein Zwei-Phasen-Gemisch in den zweiten Wärmetauscher zu bekommen. Dieser arbeitet dann ebenfalls als Verdampfer. Er wird entweder in die gleiche Kammer eingebracht, wenn diese sehr groß und die Kälteverteilung schwierig ist, oder er wird in eine zweite Kammer eingebracht. Der letztere Fall liegt z.B. vor, wenn der Kühlbedarf hinter der ersten Kammer größer oder gleich der Hälfte des Gesamtkühlbedarfs ist.

Vorteilhaft wird der Kältebedarf jeder Kammer aus dem Vergleich der Umgebungstemperatur und der je Kammer gewählten Sollwerte ständig für jede Kammer neu berechnet, z.B. von einer Steuer- oder Regeleinheit, insbesondere von einer Recheneinheit der Vorrichtung. Entsprechend diesem Kältebedarf wird das Kälteangebot an die verschiedenen Wärmetauscher geregelt. Hierfür muß die Recheneinheit (z.B. CPU in der Steuerung) sowohl die Stoffdaten des Kühlmittels, die thermischen Eigenschaften des Laderaumes bzw. seiner Isolation als auch die jeweiligen Temperaturverhältnisse berücksichtigen. Die Eingangsbedingungen in dem ersten Wärmetauscher sind bei Einsatz von kälteverflüssigtem Stickstoff (LIN) bekannt: LIN bei -196 °C hat eine Verdampfungsenthalpie von ca. 198 kJ/kg. Die spezifische Wärme des Gases ist ähnlich groß. Sie hängt im Detail von der Temperatur ab, bis zu der das Gas angewärmt wird. Die Ausgangsbedingungen des ersten Wärmetauschers können durch die Recheneinheit definiert werden. Von der 2-Phasen-Strömung bis zum bereits vorgewärmten Gas ist jede Einstellung möglich. Die Differenz der Enthalpie dieser beiden Zustände (Eingang zu Ausgang) ist die angebotene Kühlleistung. Der Ausgang des ersten Wärmetauchers ist der Eingang für den nächsten Wärmetauscher. Hier gelten die gleichen Verhältnisse. Bei der Kälteangebotsberechnung gilt es also jeden Liter Stickstoff so auf die Wärmetauscher aufzuteilen, und damit auf den Laderaumkammern zu verteilen, dass die benötigte Kälteleistung erbracht werden kann. Die in der Steuerung (MSR) berechneten Gaseigenschaften müssen im Phasentrenner (PhT) durch die Steuerung (MSR) eingestellt werden. Bei der Erfüllung dieser Regelaufgabe ändern sich die Verhältnisse ständig:

Liegt die Außentemperatur etwa bei +7 °C, so ist der Kühlbedarf einer Frischdienstkammer (FD-Kammer; Kühlkammer mit Kühltemperatur, z.B. 7 °C) Null, der einer Tiefkühlkammer (TK-Kammer) dagegen durchaus erheblich. Der flüssige Stickstoff (LIN) muss also in diesem Fall ausschließlich in die Tiefkühlkammer geleitet werden. Das Verteilungsverhältnis ist hier also 0:1.
Bei +35 °C Außentemperatur ist dagegen der Kältebedarf in der Tiefkühlkammer nur ca. 30% größer als in der Frischdienst-Kammer (Trennwand zur Tiefkühlkammer kühlt mit). Jetzt muss der flüssige Stickstoff (bei der indirekten cryogenen Kühlung) so aufgeteilt werden, dass die Kälte zu ca. 60% in die Tiefkühlkammer und zu ca. 40% in die Frischdienst-Kammer kommt. Verteilungsverhältnis 3:2.
Die Kälteverteilung gemäß dieser Berechnung wird primär nicht in Form einer Gasverteilung, sondern in Form einer Regelung der Gaseigenschaften beim Übertritt von einem in den nächsten Wärmetauscher erreicht. Insbesondere kann der Phasenübergang Flüssigkeit-Gas zu Hilfe genommen werden. In einem Phasentrenner (PhT) kann diese Trennung exakt vorgenommen werden. Wird darüber hinaus ein Temperaturfühler in den Phasentrenner montiert, so kann die Kälteverteilung noch weiter verfeinert werden.
Die Berechnungsmethode in der Steuereinheit und die Umsetzung der notwendigen Gaseigenschaften an den jeweiligen Wärmetauscher-Ausgängen in dem besonders bevorzugten Verfahren sind Gegenstand der Erfindung. Die Anordnung der Komponenten und der Steuerung (MSR) prägen die besonders bevorzugte Vorrichtung.

Vorteilhaft ist eine weitere Regelung, die dafür sorgt, dass es keine Untertemperaturen gibt. Die Temperatur im Phasentrenner sowie in allen anderen Gasübertritten von einem in den nächsten Wärmetauscher werden genutzt, um den Stickstoffzulauf zu regeln. Dadurch wird nur dann frischer Stickstoff in das System eingeführt, wenn die Übertrittstemperatur (z.B. im Phasentrenner) höher ist als der berechnete Wert. Auf diese Weise ist gewährleistet, dass es nicht zu zu niedrigen Abgastemperaturen kommen kann. Ferner wird ein hinreichendes Kälteangebot in die nachfolgenden Wärmetauscher gewährleistet. So stellt die Serienschaltung der Wärmetauscher sicher, dass es nicht zu zu tiefen Abgastemperaturen kommt bzw. dass der Wirkungsgrad der Kühleinrichtung einen sehr hohen Wert hat. Im Einzelfall kann es auch ganz oder teilweise parallel geschaltete Stränge mit jeweils einem oder mehreren Wärmetauschern geben.

So kann je Kammer die Temperatur als Gleichgewicht zwischen Kältebedarf und Kälteangebot gehalten werden. Zur Verteilung der Kälte und zum besseren Wärmeübergang an den Wärmetauschern werden vorteilhaft Ventilatoren eingesetzt. Durch sie wird die Kühlleistung jeder Kammer im Prozess über die Leistung des Ventilators bestimmt. Bläst er stark, so entzieht er dem Wärmetauscher viel Kälte, bläst er schwach, so ist die Kälteleistung sehr gering. Die Steuereinheit errechnet vorzugsweise aus der Soll/Ist-Abweichung die erforderliche Ventilatorleistung. Die Regelung der Ventilatoren erfolgt vorteilhaft je Kammer.

Zusätzlich werden die Temperaturen vorteilhaft an den jeweiligen Übergangspunkten kontrolliert und so geregelt, dass das Kälteangebot hinreichend ist. Jede Kammer erfordert dann also zwei Regelkreise. Somit greifen also bei n Kammern 2n Regelkreise auf den Kältestrom zu. Das bedeutet bei dem Transportkühlsystem (CTI-System) einen erheblichen Steuerungsaufwand. Dieser ist aber durch moderne Software und EDV-Systeme kostengünstig und zuverlässig zu realisieren.

Neben den positiven Auswirkungen auf den Gasverbrauch des CTI-Systems gibt es noch einen wesentlichen Vorteil: Das CTI-System setzt kein Gas in Kühlräume frei. Damit sinkt das Sicherheitsrisiko auf ein Minimum. Mehr noch: ein einfacher Selbsttest, der regelmäßig durchgeführt wird, macht das CTI-System auch allen mechanischen Kälteanlagen überlegen. Denn ein solcher Test der Dichtheit aller Rohrleitungen und Bauteile sowie der Funktion aller Ventile gibt es in der Technik mechanischer Kälteanlagen bisher nicht.

Es folgen vorteilhafte Ausgestaltungen des Kühlverfahrens und des Kühlsystems:
a) das kälteverflüssigte Gas und das gebildete Gas werden zur Kühlung eingesetzt, wobei sie durch Wärmetauscher Kälte an den Kühlraum abgeben und selbst als Abgas ins Freie abgeführt werden. Das Gas durchströmt einen oder mehrere Wärmetauscher und die Gaseigenschaften können am jeweiligen Ein- und Austritt geregelt werden. Hiermit kann das Kälteangebot optimiert und die Leistungsabgabe der Wärmetauscher kann unabhängig vom Kälteangebot geregelt werden.
b) Bei Mehrkammer-Kühlfahrzeugen können sich in jeder Kühlkammer ein oder mehrere Wärmetauscher befinden, die vorzugsweise mit gleichen Gasein- und Gasaustrittseigenschaften arbeiten.
c) Bei Einkammer-Kühlfahrzeugen können zwei Wärmetauscher mit zwischengeschaltetem Phasentrenner eingesetzt werden, die vorteilhaft in einem Gehäuse zusammen angeordnet werden. Die Leistung der Wärmetauscher kann einzeln oder zusammen (gleich) geregelt werden.
d) In einem Kühlsystem kann vorübergehend im Weg der Gasführung ein Wärmetauscher umgangen werden, weil in ihm momentan kein Kältebedarf vorliegt. Das heißt die Wärmetauscher können so verschaltet werden, daß einzelne Wärmetauscher zeitweise vom Kühlmittelstrom abgeschaltet werden können (z.B. mit Hilfe eines ByPasses in der Kühlmittelleitung). Die Wärmetauscher des Kühlsystems werden seriell und/oder parallel verschaltet (bezogen auf den Kühlmittelweg). Die Wärmetauscher sind vorzugsweise einzeln steuerbar. Die Leitungen für das Kühlmittel weisen in der Regel Ventile, insbesondere steuerbare Ventile, auf. Die Kühlmittelzufuhr zu den Wärmetauschern kann vorteilhaft individuell unterbrochen (abgestellt) oder eingestellt (Reduzierung oder Erhöhung der Kühlmittelzufuhr). Die Kühlmittelzufuhr zu den Wärmetauschern wird vorteilhaft bedarfsabhängig gesteuert oder geregelt.
e) Je Kühlkammer werden die Umgebungstemperatur, die Temperatur im Phasentrenner und/oder die Abgastemperatur erfaßt und der Soll/Ist-Temperaturvergleich der jeweiligen Kammer zur Regelung der Kälteleistung genutzt.
f) Kühlmittelweg und einem Wärmetauscher zugeführte Kühlmittelmenge werden vorteilhaft gesteuert. Die Steuerung der Kühlmittelführung (Kühlmittelweg), insbesondere der Gasführung (Steuerung des Gasweges) und die individuelle Steuerung der Kälteleistung eines Wärmetauschers wird vorteilhaft für alle Kühlkammern von einer Steuerung ausgeführt. In einem Kühlsystem ist vorzugsweise eine zentrale Steuereinheit für alle Steueraufgaben.
g) Die Kälteabgabe eines oder mehrerer Wärmetauscher wird vorteilhaft durch die Regelung der Leistung eines oder mehrerer oder aller Ventilatoren geändert. Die Kälteabgabe eines oder mehrerer Wärmetauscher wird insbesondere durch Änderung der zugeführten Kühlmittelmenge und/oder Leistung eines oder mehrerer oder aller Ventilatoren geändert, gesteuert oder geregelt.
h) Bei dem Kühlsystem erfolgen vorteilhaft in regelmäßigen Abständen ein Selbsttest, in dem die Funktionen der Ventile und die Dichtigkeit der innerhalb der Kühlräume gelegenen Rohrleitungen und Komponenten geprüft werden.
i) Vorteilhaft verfügt die Steuerung über Not-Schleifen, die die Kühlung bei Ausfall einer oder mehrerer Komponenten in Betrieb hält.
j) Vorteilhaft wird der Abgasdruck zum Antrieb mechanischer Geräte, z.B. Ventilatoren, genutzt.
k) Vorteilhaft wird das Abgas zum Spülen einer Inertgaskammer (separate Kammer) genutzt.

Die Erfindung wird anhand der Zeichnung erläutert.
Fig. 1 zeigt ein stark vereinfachtes Schema eines Kühlsystems mit einer Kühlkammer.
Fig. 2 zeigt ein stark vereinfachtes Schema eines Mehrkammer-Kühlsystems.
Fig. 3 zeigt ein Schema der bevorzugten Regelung eines Zweikammer-CTI-Systems.

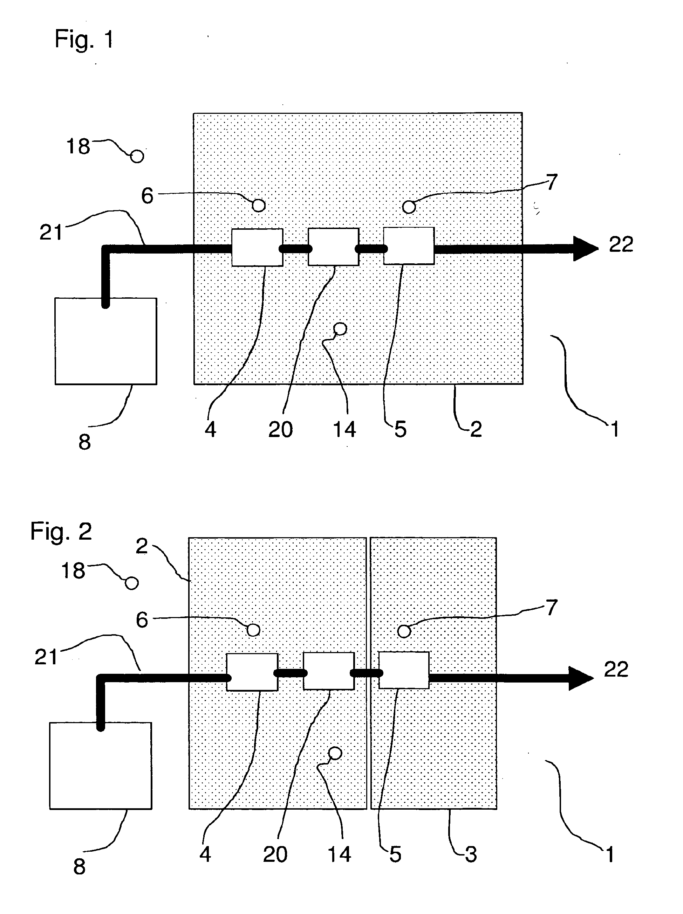

Das Kühlsystem 1 in Fig. 1 umfaßt eine Kühlkammer 2, in der mindestens ein Wärmetauscher 4 zum Verdampfen von kälteverflüssigtem Gas, mindestens ein Phasentrenner 20 zur Trennung von kälteverflüssigtem Gas und daraus gebildetem Gas und mindestens ein Wärmetauscher 5 zum Anwärmen von aus kälteverflüssigtem Gas gebildetem Gas angeordnet sind. Vorteilhaft sind ein oder mehrere Ventilatoren 6, 7 Kühlkammer 2 angeordnet. Aus einem Vorratstank 8 für kälteverflüssigtes Gas, z.B. kälteverflüssigter Stickstoff (LIN) wird über die Leitung 21 das kälteverflüssigte Gas in den Wärmetauscher 4 in der Kühlkammer 2 geleitet. Dort wird kälteverflüssigtes Gas verdampft und die Kühlflächen des Wärmetauschers gekühlt. Vom Wärmetauscher 4 wird über eine Verbindungsleitung aus kälteverflüssigtem Gas gebildetes Gas einem Phasentrenner 20 zugeführt, in dem kälteverflüssigtes Gas vom dem Gas abgetrennt und in den Wärmetauscher 4 zurückgeführt wird. Das gebildete, kalte Gas wird in einen oder mehrere Wärmetauscher 5 über eine Verbindungsleitung geleitet, wo mit dem kalten Gas der Wärmetauscher gekühlt und dabei das Gas angewärmt wird. Vom letzten Wärmetauscher 5 wird das Gas über eine Leitung aus der Kühlkammer 2 geführt und dort einer Nutzung (z.B. als Spülgas für eine separate Inertgaskammer oder als Druckgas für den Antrieb eines Gerätes wie einem Ventilator 6, 7) zugeführt oder als Abgas ins Freie 22 abgeführt. Die Vorrichtung 1 weist in der Regel mindestens einen Temperaturfühler 14 in der Kühlkammer 2 und vorteilhaft einen Temperaturfühler 18 außerhalb der Kühlkammer 2 auf. Die Temperaturfühler 14, 18 dienen in der Regelung einer Steuerung oder Regelung der Kühlvorrichtung 1. Die Temperaturfühler 14, 18 sind in der Regel mit einer Steuereinheit (nicht gezeigt) der Kühlvorrichtung 1 verbunden. Ebenfalls nicht gezeigt sind vorteilhaft ein oder mehrere steuerbare Ventile, z.B. Magnetventile, in der Leitung 21 und einer oder mehreren der nachfolgenden Verbindungsleitungen angeordnet. Die Ventilatoren 6, 7 dienen zur Verteilung der kalten Luft in der Kühlkammer 2 und können zur Steuerung der Kälteleistung der Wärmetauscher 4, 5 eingesetzt werden. Die Steuerung eines oder mehrerer Ventilatoren 6, 7 erfolgt vorteilhaft über eine zentrale Steuerung in dem Kühlsystem 1.

Das Mehrkammersystem in Fig. 2 ist analog zu dem Kühlsystem von Fig. 1 aufgebaut. Gezeigt wird ein Zweikammersystem 1 mit den Kühlkammern 2 und 3. In jeder Kühlkammer 2, 3 ist mindestens ein Wärmetauscher 4, 5, mindestens ein Ventilator 6, 7 und mindestens ein Temperaturfühler 14 angeordnet. In der Kühlkammer 2 können wie in Fig. 1 ein Wärmetauscher-Verdampfer 4, ein Phasentrenner 20 und ein oder mehrere Wärmetauscher-Gasanwärmer 5 angeordnet sein. Die weiteren Kühlkammern, Kühlkammer 3 und gegebenenfalls weitere Kühlkammern enthalten mindestens einen Wärmetauscher-Gasanwärmer 5. Der Phasentrenner 20 kann auch in der nachfolgenden Kühlkammer, Kühlkammer 3, dem Wärmetauscher 5 vorgeschaltet, angeordnet sein. Auch in Fig. 2 sind mögliche steuerbare Ventile und eine vorteilhafte Steuereinheit nicht gezeigt. Das Mehrkammersystem, wie auch das Einkammersystem, wird vorzugsweise bei einem Kühlfahrzeug (z.B. Lkw mit einer oder mehreren Kühlkammern) verwendet.

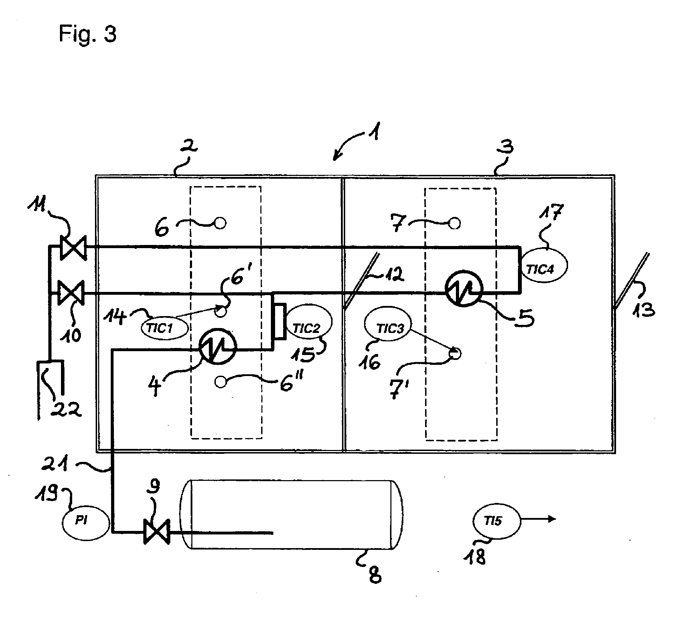

Das bevorzugte Kühlsystem 1 für ein Kühlfahrzeug (Zweikammer-Kühlfahrzeug) wird schematisch in Fig. 3 gezeigt. Das Kühlsystem enthält eine Tiefkühlkammer 2 für Tiefkühltemperatur (z.B. minus 18 °C) und eine Frischdienstkammer 3 für Kühlung um oder über 0 °C (z.B. 7 °C) in der Kammer. Aus einem Vorratstank 8 für kälteverflüssigtes Gas, z.B. kälteverflüssigter Stickstoff (LIN), wird über die Leitung 21 mit einem vorzugsweise steuerbaren Ventil 9 (z.B. Magnetventil) das kälteverflüssigte Gas in den Wärmetauscher 4 in der Tiefkühlkammer 2 geleitet. Von dem Wärmetauscher 4 (Verdampfer) gehen Verbindungsleitungen über einen Phasentrenner (nicht gezeigt) zu einem weiteren Wärmetauscher 5 (Gasanwärmer) in der zweiten Kühlkammer 3 (Frischdienst-Kammer) und vorzugsweise zu einem Abgasausgang 22. Den Wärmetauschern 4, 5 sind Ventilatoren 6, 6', 6", 7, 7' zugeordnet. In dem Schema von Fig. 3 sind die vorzugsweise steuerbaren Ventile 9, 10 und 11 gezeigt. In dem System können weitere Ventile angeordnet werden, um beispielsweise die Kälteleistung der Wärmetauscher 4, 5 zu steuern. In den Kühlkammern 2, 3 sind Temperaturfühler 14, 15, 16, 17 angeordnet. Außerhalb der Kühlkammern ist mindestens ein Temperaturfühler 18 zur Messung der Außentemperatur angeordnet. Die Temperaturfühler dienen in der Regel zur Steuerung der Kühlung in den Kühlkammern 2, 3. Die Kühlkammern 2, 3 weisen in der Regel eine Tür 12 oder 13 auf. Das System kann weitere Meßfühler, z.B. einen Druckfühler 19, aufweisen. Vorteilhaft enthält das System 1 eine Steuereinheit, vorzugsweise eine zentrale Steuereinheit.

Besonders bevorzugt hat das Kühlsystem in Fig. 3 folgende Besonderheiten:
- Kammern:: TK-Kammer 2 = -18 °C; FD-Kammer 3 = +5 °C
- Bedingungen:: TK-Kammer 2 immer kälter als FD-Kammer 3. Temperatursoll FD-Kammer > 0 °C
- Türen:: je eine Kammertür (12, 13), von außen in FD-Kammer 3 und von FD-Kammer 3 in TK-Kammer 2, jeweils mit Streifenvorhang.

Das bevorzugte Verfahren zur Kühlung, z.B. die Kühlung bei einem Zweikammer-Kühlfahrzeug (Lkw) mit einem Kühlsystem wie in Fig. 3, wird nachfolgend erläutert.

Das Verfahren teilt sich in 5 Grundprozessschritte auf:

### 1. Lkw-Aufbauabkühlung

Das System erkennt die Notwendigkeit zur Aufbauabkühlung aus den vorliegenden Temperaturen. Je nach Kühlbedarf wird über die Ventile 10 und 11 der Gasweg bestimmt. Aufgrund der vorausgesetzten Bedingungen ist der Kältebedarf in der ersten Kammer 2 stets am größten. Sie wird daher in dieser Phase bevorzugt gekühlt.

### 2. Kühlbetrieb

Die Außentemperatur gibt den Kühlbedarf an. Hieraus leiten sich die zulässigen Phasentrenner- (20) und Abgas-Temperaturen ab. Aus den Soll/Ist-Vergleichen resultieren die Ventilator-Leistungen. Im einfachsten Fall werden die Ventilatoren 6, 6', 6", 7, 7' der jeweiligen Kammern 2, 3 nur proportional geregelt. Der Ausbau auf eine sog. PID-Charakteristik ist denkbar, macht aber bei Fahrzeugen mit vielen Türöffnungen 12, 13 keinen Sinn, da die vorausschauenden Eigenschaften der Regelung ständig irregeführt werden. Die Ventilatoren 6, 6', 6" oder 7, 7' werden nur ganz ausgeschaltet, falls die Türe 12 oder 13 geöffnet wird. Im Kühlbetrieb kann er nur auf eine kleinste Leistung reduziert werden, da diese für eine repräsentative Temperaturmessung notwendig ist. Bei Erreichen der Solltemperatur kann die zweite Kammer von der Kühlung getrennt werden. Bei Erreichen der Temperatur in der ersten Kammer wird die Kühlung ganz abgeschaltet.

### 3. Türöffnung / Türschließen

Während die Tür 12, 13 einer Kammer 2, 3 geöffnet ist, schaltet der jeweilige Ventilator 6, 6', 6", 7, 7' aus. Die LIN-Zufuhr bleibt geregelt (schnelles Anlaufen nach Schließen).

### 4. Abtauen

Nach einer wählbaren Zeit oder Anzahl von Türöffnungen seit Einschalten oder nach dem Signal einer Eis-Sonde beginnt ein Abtauzyklus jedes Wärmetauschers 4, 5.
In der zweiten Kammer 3 (Temperatur größer Null) kann der Wärmetauscher 5 allein durch die Ventilatoren 7, 7' soweit angewärmt werden, daß der Eisansatz abschmilzt.
In der ersten Kammer 2 (Temperatur unter dem Gefrierpunkt) geht das nicht. Hier kann ein anderer Mechanismus genutzt werden. An Wärmetauscher-Verdampfern 4 für flüssigen Stickstoff bildet sich naturgemäß nicht sofort Eis, sondern es entsteht ein sehr trockener Pulverschnee. Dieser kann durch Druckpulse (z.B. Gasstöße) abgeblasen werden.

### 5. Drucktest zur Prüfung auf Gasaustritt im Laderaum

Zur Prüfung der Dichtigkeit wird sofort nach Einschalten (also vor dem Kaltfahren) und wiederholend im Kühlbetrieb (nicht jedoch in den ersten 10 Minuten nach Türeschließen) folgende Prozedur zwischengeschaltet:
- Die Restflüssigkeit in den Wärmetauschern wird verdampft und das Gas auf die jeweilige Kammertemperatur angewärmt.
- Dann wird der vorhandene Tankdruck im System eingesperrt und beobachtet. Je nach Verhalten werden die Maßnahmen getroffen, um Funktion und Sicherheit aufrecht zu halten.
- Danach wird der Druck ins Freie 22 entlastet und das System wieder geschlossen. So kann die Dichtigkeit des Zulaufventils kontrolliert werden. Auch hier werden je nach Druckverlauf Maßnahmen getroffen, die die Funktion und die Sicherheit aufrecht erhalten.

## Patentansprüche

1. Kühlsystem (1) für Kühlfahrzeuge, mit mindestens einer Kühlkammer (2, 3), wobei das Kühlsystem (1) mit einem kälteverflüssigten Gas betrieben wird, umfassend mindestens einen Wärmetauscher-Verdampfer (4) zum Verdampfen von kälteverflüssigtem Gas, mindestens einen Phasentrenner (20) zur Trennung von kälteverflüssigtem Gas und daraus gebildetem Gas, mindestens einen Wärmetauscher-Gasanwärmer (5) zum Anwärmen des aus dem kälteverflüssigten Gas gebildeten Gases und mindestens einen Ventilator (6, 6', 6", 7, 7'), wobei das kälteverflüssigte Gas und daraus gebildetes Gas von dem Innenraum der Kühlkammer (2, 3) räumlich getrennt sind, wobei das kälteverflüssigte Gas dem mindestens einen Wärmetauscher-Verdampfer (4) zuführbar ist und das aus dem kälteverflüssigten Gas gebildete Gas dem mindestens einen Wärmetauscher-Gasanwärmer (5) zugeführt wird.

2. Kühlsystem (1) nach Anspruch 1, **dadurch gekennzeichnet, dass** der Phasentrenner (20) dem Wärmetauscher-Verdampfer (4), der für die Zuführung von kälteverflüssigtem Gas vorgesehen ist, zugeordnet ist.

3. Kühlsystem (1) nach einem der Ansprüche 1 oder 2, **dadurch gekennzeichnet, dass** am Eingang und/oder am Ausgang des Wärmetauscher-Verdampfers (4) und/oder des Wärmetauscher-Gasanwärmers (5) mindestens ein steuerbares Ventil (9, 10, 11) angeordnet ist.

4. Kühlsystem (1) nach einem der Ansprüche 1 bis 3, **dadurch gekennzeichnet, dass** der mindestens eine Ventilator (6, 6', 6", 7, 7') in der Leistung regelbar und einem der Wärmetauscher (4, 5) zugeordnet ist.

5. Kühlsystem nach einem der Ansprüche 1 bis 4, **dadurch gekennzeichnet, dass** der mindestens eine Wärmetauscher-Verdampfer (4) und der mindestens eine Wärmetauscher-Gasanwärmer (5) in verschiedenen Kühlkammern (2, 3) angeordnet sind.

6. Verfahren zur Kühlung einer oder mehrerer Kühlkammern (2, 3) mit einem kälteverflüssigten Gas, wobei das kälteverflüssigte Gas mindestens einem in einer Kühlkammer (2, 3) angeordneten Wärmetauscher-Verdampfer (4) zum Verdampfen zugeführt und das aus kälteverflüssigtem Gas gebildete Gas mindestens einem weiteren in einer Kühlkammer (2, 3) angeordneten Wärmetauscher-Gasanwärmer (5) zum Anwärmen zugeführt wird, wobei das kälteverflüssigte Gas und daraus gebildetes Gas nicht in den Innenraum der Kühlkammer oder Kühlkammern (2, 3) gelangen.

7. Verfahren nach Anspruch 6, **dadurch gekennzeichnet, dass** kälteverflüssigtes Gas oder aus kälteverflüssigtem Gas gebildetes Gas den Wärmetauschern (4, 5) gesteuert und/ oder geregelt zugeführt wird oder die Leistungsabgabe eines oder mehrerer Wärmetauscher (4, 5) durch Regelung der Leistung eines oder mehrerer Ventilatoren (6, 6', 6", 7, 7') erfolgt.

8. Verfahren nach Anspruch 6 oder 7, **dadurch gekennzeichnet, dass** aus kälteverflüssigtem Gas gebildetes Gas zum Antrieb eines mechanischen Gerätes oder Ventilators (6, 6', 6", 7, 7') oder zum Spülen einer Inertgaskammer genutzt wird.

9. Verfahren nach einem der Ansprüche 6 bis 8, **dadurch gekennzeichnet, dass** der mindestens eine Wärmetauscher-Verdampfer (4) und der mindestens eine Wärmetauscher-Gasanwärmer (5) in verschiedenen Kühlkammern (2, 3) angeordnet sind, wobei diese vorzugsweise auf unterschiedlichen Temperaturen gehalten werden, insbesondere die Kühlkammer (3) mit dem Wärmetauscher-Gasanwärmer (5) auf höherer Temperatur

## Claims

1. Cooling system (1) for refrigerated vehicles, comprising at least one cooling chamber (2, 3), wherein the cooling system (1) is driven by a cold-liquefied gas, comprising at least one heat exchanger-evaporator (4) for evaporating cold-liquefied gas, at least one phase separator (20) for separating cold-liquefied gas and gas generated therefrom, at least one heat exchanger-gas heater (5) for heating the gas generated from the cold-liquefied gas and at least one fan (6, 6', 6", 7, 7'), with the cold-liquefied gas and gas generated therefrom being spatially separated from the interior of the cooling chamber (2, 3), wherein the cold-liquefied gas can be supplied to the at least one heat exchanger-evaporator (4) and the gas generated from the cold-liquefied gas is supplied to the at least one heat exchanger-gas heater (5).

2. Cooling system (1) according to Claim 1, **characterized in that** the phase separator (20) is assigned to the heat exchanger-evaporator (4), which is provided for the supply of cold-liquefied gas.

3. Cooling system (1) according to one of Claims 1 or 2, **characterized in that** at least one controllable valve (9, 10, 11) is disposed at the inlet and/or at the outlet of the heat exchanger-evaporator (4) and/or of the heat exchanger-gas heater (5).

4. Cooling system (1) according to one of Claims 1 to 3, **characterized in that** the at least one fan (6, 6', 6", 7, 7') has adjustable power and is assigned to one of the heat exchangers (4, 5).

5. Cooling system according to one of Claims 1 to 4, **characterized in that** the at least one heat exchanger-evaporator (4) and the at least one heat exchanger-gas heater (5) are disposed in different cooling chambers (2, 3).

6. Method for cooling one or more cooling chambers (2, 3) using a cold-liquefied gas, wherein the cold-liquefied gas is supplied for evaporation to at least one heat exchanger-evaporator (4) disposed in a cooling chamber (2, 3) and the gas generated from cold-liquefied gas is supplied for heating to at least one further heat exchanger-gas heater (5) disposed in a cooling chamber (2, 3), with the cold-liquefied gas and gas generated therefrom not reaching the interior of the cooling chamber or cooling chambers (2, 3).

7. Method according to Claim 6, **characterized in that** cold-liquefied gas or gas generated from cold-liquefied gas is supplied to the heat exchangers (4, 5) in a controlled and/or regulated manner or the power output of one or more heat exchangers (4, 5) takes place by regulating the power of one or more fans (6, 6', 6", 7, 7').

8. Method according to Claim 6 or 7, **characterized in that** gas generated from cold-liquefied gas is used for driving a mechanical apparatus or fan (6, 6', 6", 7, 7') or for purging an inert gas chamber.

9. Method according to one of Claims 6 to 8, **characterized in that** the at least one heat exchanger-evaporator (4) and the at least one heat exchanger-gas heater (5) are disposed in different cooling chambers (2, 3), wherein said cooling chambers are preferably kept at different temperatures, in particular the cooling chamber (3) with the heat exchanger-gas heater (5) is kept at a higher temperature.

## Revendications

1. Système de refroidissement (1) pour véhicules frigorifiques, comprenant au moins une chambre de refroidissement (2, 3), le système de refroidissement (1) étant entraîné par un gaz liquéfié à basse température, comprenant au moins un évaporateur-échangeur de chaleur (4) pour évaporer le gaz liquéfié à basse température, au moins un séparateur de phases (20) pour séparer le gaz liquéfié à basse température et le gaz formé à partir de celui-ci, au moins un réchauffeur de gaz-échangeur de chaleur (5) pour réchauffer le gaz formé à partir du gaz liquéfié à basse température et au moins un ventilateur (6, 6', 6", 7, 7'), le gaz liquéfié à basse température et le gaz formé à partir de celui-ci étant séparés physiquement de l'espace interne de la chambre de refroidissement (2, 3), le gaz liquéfié à basse température pouvant être acheminé à l'au moins un évaporateur-échangeur de chaleur (4) et le gaz formé à partir du gaz liquéfié à basse température étant acheminé à l'au moins un réchauffeur de gaz-échangeur de chaleur (5).

2. Système de refroidissement (1) selon la revendication 1, **caractérisé en ce que** le séparateur de phases (20) est associé à l'évaporateur-échangeur de chaleur (4) qui est prévu pour acheminer le gaz liquéfié à basse température.

3. Système de refroidissement (1) selon la revendication 1 ou 2, **caractérisé en ce qu'**au moins une soupape commandable (9, 10, 11) est disposée à l'entrée et/ou à la sortie de l'évaporateur-échangeur de chaleur (4) et/ou du réchauffeur de gaz-échangeur de chaleur (5).

4. Système de refroidissement (1) selon l'une quelconque des revendications 1 à 3, **caractérisé en ce que** l'au moins un ventilateur (6, 6', 6", 7, 7') peut être régulé en puissance et est associé à l'un des échangeurs de chaleur (4, 5).

5. Système de refroidissement selon l'une quelconque des revendications 1 à 4, **caractérisé en ce que** l'au moins un évaporateur-échangeur de chaleur (4) et l'au moins un réchauffeur de gaz-échangeur de chaleur (5) sont disposés dans des chambres de refroidissement différentes (2, 3).

6. Procédé de refroidissement d'une ou plusieurs chambres de refroidissement (2, 3) comprenant un gaz liquéfié à basse température, le gaz liquéfié à basse température étant acheminé à au moins un évaporateur-échangeur de chaleur (4) disposé dans une chambre de refroidissement (2, 3) en vue de son évaporation et le gaz formé à partir du gaz liquéfié à basse température étant acheminé à au moins un réchauffeur de gaz-échangeur de chaleur (5) disposé dans une chambre de refroidissement (2, 3) en vue de son réchauffement, le gaz liquéfié à basse température et le gaz formé à partir de celui-ci ne parvenant pas dans l'espace interne de la chambre de refroidissement ou des chambres de refroidissement (2, 3).

7. Procédé selon la revendication 6, **caractérisé en ce que** le gaz liquéfié à basse température ou le gaz formé à partir du gaz liquéfié à basse température est acheminé de manière commandée et/ou de manière régulée aux échangeurs de chaleur (4, 5) ou la génération de puissance d'un ou de plusieurs échangeurs de chaleur (4, 5) est réalisée par régulation de la puissance d'un ou plusieurs ventilateurs (6, 6', 6", 7, 7').

8. Procédé selon la revendication 6 ou 7, **caractérisé en ce que** le gaz formé à partir du gaz liquéfié à basse température est utilisé pour l'entraînement d'un appareil mécanique ou d'un ventilateur (6, 6', 6", 7, 7') ou pour le rinçage d'une chambre de gaz inerte.

9. Procédé selon l'une quelconque des revendications 6 à 8, **caractérisé en ce que** l'au moins un évaporateur-échangeur de chaleur (4) et l'au moins un réchauffeur de gaz-échangeur de chaleur (5) sont disposés dans des chambres de refroidissement différentes (2, 3), celles-ci étant de préférence maintenues à des températures différentes, en particulier la chambre de refroidissement (3) avec le réchauffeur de gaz-échangeur de chaleur (5) étant maintenue à une plus haute température.
